# EUROPEAN PATENT APPLICATION

(11) **EP 4 654 676 A1**
(43) Date of publication of application: **26.11.2025**
(21) Application number: 23916765.3
(22) Date of filing: 19.01.2023
(51) Int. Cl.: H04W 52/02

(54) **COMMUNICATION METHOD AND COMMUNICATION APPARATUS**

(71) Applicant: GUANGDONG OPPO MOBILE TELECOMMUNICATIONS CORP., LTD., Dongguan, Guangdong 523860 (CN)
(72) Inventor: LIU, Yang, Dongguan, Guangdong 523860 (CN); YU, Xinlei, Dongguan, Guangdong 523860 (CN)
(74) Representative: Mewburn Ellis LLP
(86) International application number: PCT/CN2023/073050
(87) International publication number: WO 2024/152282

(57) **Abstract**

A communication method and communication apparatus are provided. The method includes: a terminal device receives first information, and the first information indicates a first discontinuous reception (DRX) cycle corresponding to an energy-saving function; the terminal device determines a target DRX cycle of the terminal device according to the first information. The method can reduce the power consumption of energy-saving terminal devices.

## Description

### TECHNICAL FIELD

This disclosure relates to the field of communication technology, and more specifically, to a communication method and a communication apparatus.

### BACKGROUND

With the development of communication technology, certain communication systems have proposed introducing longer discontinuous reception (DRX) cycles for terminal devices supporting energy-saving functions to further reduce power consumption. However, it is not yet clear how to implement this.

### SUMMARY

This disclosure provides a communication method and a communication apparatus. Various aspects involved in the disclosure are introduced below.

In a first aspect, a communication method is provided, which includes the following. A terminal device receives first information, and the first information indicates a first discontinuous reception (DRX) cycle corresponding to an energy-saving function. The terminal device determines a target DRX cycle of the terminal device according to the first information.

In a second aspect, a communication method is provided, which includes the following. A network device sends first information, and the first information is used to indicate a first DRX cycle corresponding to an energy-saving function.

In a third aspect, a communication apparatus is provided, which includes a receiving unit and a determining unit. The receiving unit is configured to receive first information, and the first information indicates a first DRX cycle corresponding to an energy-saving function. The determining unit is configured to determine a target DRX cycle of the apparatus according to the first information.

In a fourth aspect, a communication apparatus is provided, which includes a sending unit. The sending unit is configured to send first information, and the first information is used to indicate a first DRX cycle corresponding to an energy-saving function.

In a fifth aspect, a communication apparatus is provided, which includes a memory, a transceiver, and a processor. The memory is used to store programs, the processor is configured to transmit and receive data through the transceiver, and the processor is configured to call the programs stored in the memory to enable the communication apparatus to perform the method as described in the first aspect.

In a sixth aspect, a communication apparatus is provided, which includes a memory, a transceiver, and a processor. The memory is used to store programs, the processor is configured to transmit and receive data through the transceiver, and the processor is configured to call the programs stored in the memory to enable the communication apparatus to perform the method as described in the second aspect.

In a seventh aspect, a communication apparatus is provided, which includes a processor. The processor is configured to call programs from the memory to enable the communication apparatus to perform the method as described in the first aspect.

In an eighth aspect, a communication apparatus is provided, which includes a processor. The processor is configured to call programs from the memory to enable the communication apparatus to perform the method as described in the first aspect.

In a ninth aspect, a chip is provided, which includes a processor. The processor is configured to call programs from the memory to enable a device equipped with the chip to perform the method as described in the first aspect.

In a tenth aspect, a chip is provided, which includes a processor. The processor is configured to call programs from the memory to enable a device equipped with the chip to perform the method as described in the second aspect.

In an eleventh aspect, a computer-readable storage medium is provided, which stores programs. The programs enable a computer to perform the method as described in the first aspect.

In a twelfth aspect, a computer-readable storage medium is provided, which stores programs. The programs enable a computer to perform the method as described in the second aspect.

In a thirteenth aspect, a computer program product is provided, which includes programs. The programs enable a computer to perform the method as described in the first aspect.

In a fourteenth aspect, a computer program product is provided, which includes programs. The programs enable a computer to perform the method as described in the second aspect.

In a fifteenth aspect, a computer program is provided, which enables a computer to perform the method as described in the first aspect.

In a sixteenth aspect, a computer program is provided, which enables a computer to perform the method as described in the second aspect.

In the disclosure, the first information indicates a first DRX cycle corresponding to an energy-saving function, and the terminal device determines the target DRX cycle of the terminal device according to the first information. This can extend the DRX cycle of an energy-saving terminal device without affecting the latency of transmission of non-energy-saving terminal devices, thereby helping to reduce the power consumption of the energy-saving terminal device.

### BRIEF DESCRIPTION OF THE DRAWINGS

Figure 1 is an exemplary diagram of a wireless communication system to which the disclosure is applied.
Figure 2 is a schematic flowchart of a communication method according to an embodiment of the disclosure.
Figure 3 is a schematic flowchart of a communication method according to another embodiment of the disclosure.
Figure 4 is a schematic flowchart of a communication method according to another embodiment of the disclosure.
Figure 5 is a schematic structural diagram of a communication apparatus according to an embodiment of the disclosure.
Figure 6 is a schematic structural diagram of a communication apparatus according to another embodiment of the disclosure.
Figure 7 is a schematic structural diagram of an apparatus according to an embodiment of the disclosure.

### DETAILED DESCRIPTION

Technical solutions of the disclosure will be described below in conjunction with the accompanying drawings.

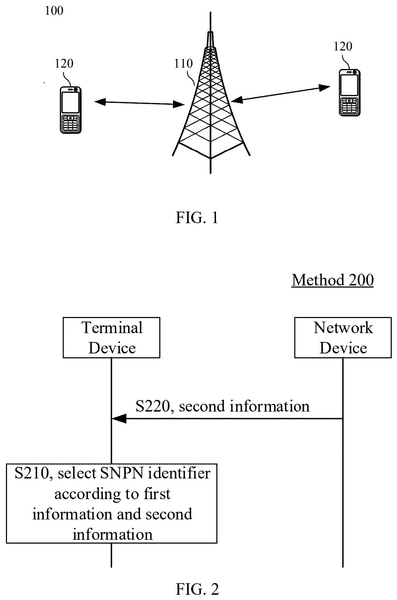

Figure 1 illustrates a wireless communication system 100 to which the disclosure is applied. The wireless communication system 100 can include a network device 110 and a user equipment (UE) 120. The network device 110 can communicate with the UE 120. The network device 110 can provide communication coverage for a specific geographical area and can communicate with the UE 120 located within that coverage area. The UE 120 can access the network (such as a wireless network) through the network device 110.

Figure 1 exemplarily illustrates one network device and two UEs. Optionally, the wireless communication system 100 can include multiple network devices, and each network device's coverage area can have other numbers of terminal devices. The disclosure does not limit this. Optionally, the wireless communication system 100 can also include other network entities such as a network controller, a mobility management entity, etc. The disclosure does not limit this.

It should be understood that the technical solution of the disclosure can be applied to various communication systems, such as: the 5th generation (5G) system or new radio (NR), long term evolution (LTE) system, LTE frequency division duplex (FDD) system, LTE time division duplex (TDD), etc. The technical solution provided by the disclosure can also be applied to future communication systems, such as the 6th generation (6G) mobile communication system, satellite communication systems, etc.

The UE in the disclosure can also be referred to as a terminal device, access terminal, user unit, user station, mobile station, mobile terminal, remote station, remote terminal, mobile device, user terminal, wireless communication device, user agent, or user equipment. The UE in the disclosure can be a device that provides voice and/or data connectivity to users, and can be used to connect people, objects, and machines, such as handheld devices with wireless connectivity, vehicular devices, etc. The UE in the disclosure can be a mobile phone, tablet computer (Pad), laptop, handheld computer, mobile internet device (MID), wearable device, virtual reality (VR) device, augmented reality (AR) device, industrial control wireless terminal, self-driving wireless terminal, remote medical surgery wireless terminal, smart grid wireless terminal, transportation safety wireless terminal, smart city wireless terminal, smart home wireless terminal, etc. Optionally, the UE can be used as a base station. For example, the UE can act as a scheduling entity, providing sidelink signals between UEs in vehicle to everything (V2X) or device to device (D2D). For example, a cellular phone and a car can communicate using sidelink signals. A cellular phone and a smart home device can communicate without relaying signals through a base station.

The network device in the disclosure can be a device used to communicate with the UE, and the network device can also be referred to as an access network device or a wireless access network device, such as a base station. The network device in the disclosure can be a radio access network (RAN) node (or device) that connects the UE to the wireless network. The base station can generally cover or be interchangeable with the following various names, such as: NodeB, evolved NodeB (eNB), next-generation NodeB (gNB), relay station, access point, transmitting and receiving point (TRP), transmitting point (TP), master station MeNB, secondary station SeNB, multi-standard radio (MSR) node, home base station, network controller, access node, wireless node, access point (AP), transmission node, transceiver node, baseband unit (BBU), remote radio unit (RRU), active antenna unit (AAU), remote radio head (RRH), central unit (CU), distributed unit (DU), positioning node, etc. The base station can be a macro base station, micro base station, relay node, donor node, or similar, or a combination thereof.

In some embodiments, the network device can be fixed or mobile. For example, a helicopter or a drone can be configured to act as a mobile network device, and one or more cells can move according to the position of the mobile network device. In other examples, a helicopter or a drone can be configured to act as a device communicating with another network device. In some embodiments, the network device can be a CU or DU, or the network device can include CU and DU, or the network device can also include AAU.

It should be understood that the network device can be deployed on land, including indoors or outdoors, handheld or vehicular; it can also be deployed on water; it can also be deployed in the air on aircraft, balloons, and satellites. The disclosure does not limit the network device and the scenarios where it is located.

It should also be understood that all or part of the functions of the network device and UE in the disclosure can be realized by running software on hardware, or by virtualized functions instantiated on a platform (such as a cloud platform).

In some communication systems, a terminal device in idle or inactive state can periodically wake up to receive paging messages that may come from the network, that is, discontinuous reception (DRX). The cycle of each waking up is called a DRX cycle (cycle), and a DRX cycle can contain several paging frames (PF), and a PF can correspond to several paging occasions (PO), and a terminal device can receive paging messages on only one PO.

During a non-access stratum (NAS) registration process, the Access and mobility management function (AMF) can negotiate a UE-specific DRX cycle. This negotiation is not visible to the base station, so the base station may not know the DRX cycle being used by the UE. However, the AMF can also use the "core network assistance information" parameter structure to provide the base station with information about the UE-specific DRX cycle. This parameter structure can be included in the NG application protocol (NGAP), such as in the initial context setup request message, UE context modification request message, handover request message, or path switch request confirmation message.

The DRX cycle is defined as the default paging cycle broadcast in system information block 1 (SIB1), unless a UE-specific value (such as a UE-specific DRX cycle) has been configured. If a UE-specific DRX cycle is configured, the DRX cycle is the minimum value among the default paging cycle and the UE-specific DRX cycle.

In Release 18 (R18) of the communication protocol, the low power high accuracy positioning (LPHAP) function was proposed, aiming to enhance the experience for a class of terminals with long standby time requirements, such as workpieces in factories, one of the services is positioning. One point discussed in the standards meeting is to extend the existing DRX cycle, increasing the current maximum cycle of 10.24 seconds to a higher level such as 20.48 seconds. That is, at the cost of increased latency of data transmission, to further reduce the power consumption of the terminal device.

However, if the default DRX cycle broadcast in SIB1 is simply extended to a value greater than 10.24 seconds, then those terminal devices without energy-saving requirements will also have to apply this DRX cycle, which will severely affect the latency of data transmission of these terminal devices without energy-saving requirements.

To solve one or more of the above-mentioned technical problems, the disclosure proposes a communication method and a communication apparatus, which can extend the DRX cycle of energy-saving terminal devices (i.e., terminal devices with energy-saving requirements) without affecting the latency of data transmission of existing non-energy-saving terminal devices (i.e., terminal devices without energy-saving requirements), thereby reducing the power consumption of energy-saving terminal devices.

The disclosure will be described in detail below with reference to Figures 2 to 4.

Figure 2 is a schematic flowchart of a communication method according to an embodiment of the disclosure. The method 200 illustrated in Figure 2 can include steps S210 and S220, specifically as follows.

S210, a network device sends first information to a terminal device.

The first information indicates a first DRX cycle corresponding to an energy-saving function. For example, the first information can include two fields, one field can indicate an energy-saving function or a non-energy-saving function, and one field can indicate the value of the DRX cycle; or these two fields can also correspond to the energy-saving function and the non-energy-saving function respectively, that is, one field is used to indicate the DRX cycle corresponding to the energy-saving function, and the other field is used to indicate the DRX cycle corresponding to the non-energy-saving function. These embodiments are only examples and not limitations, and the disclosure does not limit the indication manner of the first information.

Optionally, the energy-saving function can include the LPHAP positioning function, and can also include other functions corresponding to the energy-saving requirement.

Optionally, the first DRX cycle can be a UE-specific DRX cycle corresponding to the energy-saving function, for example, the LPHAP UE-specific DRX cycle corresponding to the LPHAP positioning function.

Or, the first DRX cycle can also be a default DRX cycle corresponding to the energy-saving function, for example, the LPHAP default DRX cycle corresponding to the LPHAP positioning function.

Optionally, in S210, the network device can send the first information to the terminal device through radio resource control (RRC) signaling or non-access stratum (NAS) signaling.

Optionally, in S210, the network device can also send the first information to the terminal device through a broadcast message (such as SIB1).

Optionally, the network device can be an access network device, such as a RAN or next generation radio access network (NG-RAN), etc.; or it can be a core network element, such as an AMF or a session management function (SMF), etc.

Optionally, when the network device is a core network element, the network device can send the first information through an access network device. At this time, the access network device can only perform transparent transmission on the first information without processing it.

Optionally, the terminal device can be an energy-saving terminal device. Or, the terminal device can also be a non-energy-saving terminal device.

The terminal device can be pre-configured with an energy-saving function, that is, the terminal device can be pre-configured as an energy-saving terminal device.

Or, the terminal device can also be configured with an energy-saving function by the network device. For example, the network device can send second information to the terminal device, and the second information is used to configure an energy-saving function for the terminal device or to indicate the terminal device to configure (or apply) an energy-saving function. Further, the terminal device can configure the energy-saving function based on the second information.

Optionally, the second information and the first information can be sent simultaneously, for example, the second information and the first information can be carried in the same message, or the second information and the first information can be the same information.

Optionally, the second information and the first information can also be sent at different times.

Optionally, the terminal device can be in idle state or inactive state.

S220, the terminal device determines a target DRX cycle of the terminal device according to the first information.

Optionally, the target DRX cycle can refer to an DRX cycle actually to be applied by the terminal device.

In some embodiments, the terminal device can determine the target DRX cycle according to the first DRX cycle and a second DRX cycle. Optionally, the first DRX cycle can be a UE-specific DRX cycle corresponding to the energy-saving function, and the second DRX cycle can be a default DRX cycle.

Optionally, the terminal device can determine the maximum value among the first DRX cycle and the second DRX cycle as the target DRX cycle. For example, the target DRX cycle = MAX (LPHAP UE-specific DRX cycle, default DRX cycle). In some embodiments, the terminal device can also directly determine the first DRX cycle as the target DRX cycle without comparing with the second DRX cycle. At this time, the terminal device can be an energy-saving terminal device.

Optionally, the terminal device can also determine the minimum value among the first DRX cycle and the second DRX cycle as the target DRX cycle. For example, the target DRX cycle = MIN (LPHAP UE-specific DRX cycle, default DRX cycle). At this time, the terminal device can be a non-energy-saving terminal device.

In some embodiments, the terminal device can determine the target DRX cycle according to the first DRX cycle and a third DRX cycle. Optionally, the first DRX cycle can be a default DRX cycle corresponding to the energy-saving function, and the third DRX cycle can be a UE-specific DRX cycle of the terminal device. Optionally, the third DRX cycle can be a UE-specific DRX cycle other than the UE-specific DRX cycle corresponding to the energy-saving function in the related art.

Optionally, the terminal device can determine the minimum value among the first DRX cycle and the third DRX cycle as the target DRX cycle. For example, the target DRX cycle = min (LPHAP default DRX cycle, UE-specific DRX cycle). In some embodiments, the terminal device can also directly determine the first DRX cycle as the target DRX cycle without comparing with the third DRX cycle. At this time, the terminal device can be an energy-saving terminal device.

Optionally, the terminal device can also determine, according to the second information, whether to determine the target DRX cycle according to the first DRX cycle and the third DRX cycle or according to the second DRX cycle and the third DRX cycle. Optionally, the second information can be used to configure an energy-saving function for the terminal device or to indicate the terminal device to configure (or apply) an energy-saving function, and the second DRX cycle can be a default DRX cycle.

For example, if the second information indicates that the terminal device is to apply the energy-saving function, then the terminal device can determine, according to the second information, to determine the target DRX cycle according to the first DRX cycle and the third DRX cycle, that is, at this time, the terminal device is an energy-saving terminal device, and the target DRX cycle = min (LPHAP default DRX cycle, UE-specific DRX cycle); otherwise, the terminal device can determine the target DRX cycle according to the second DRX cycle and the third DRX cycle, that is, at this time, the terminal device is a non-energy-saving terminal device, and the target DRX cycle = min (default DRX cycle, UE-specific DRX cycle).

In the disclosure, the first information indicates a first DRX cycle corresponding to an energy-saving function, and the terminal device determines the target DRX cycle of the terminal device according to the first information. This can extend the DRX cycle of the energy-saving terminal device without affecting the latency of transmission of non-energy-saving terminal devices, thereby helping to reduce the power consumption of the energy-saving terminal devices.

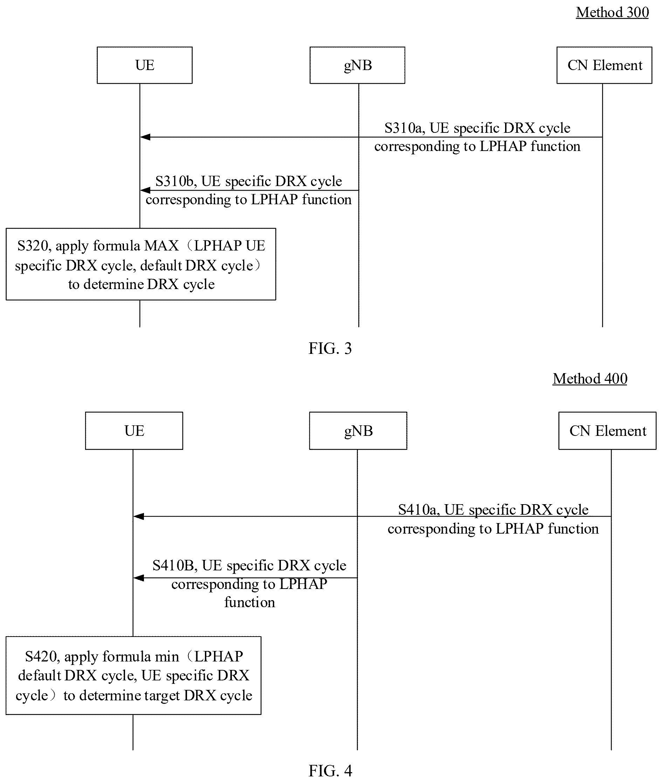

The above embodiments will be described in detail below with reference to Figures 3 and 4.

Figure 3 is a schematic flowchart of a communication method according to an embodiment of the disclosure. The method 300 illustrated in Figure 3 can include steps S310 and S320, specifically as follows.

S310, a network device sends a UE-specific DRX cycle corresponding to an LPHAP function to a UE.

The network device can be a base station (gNB) or a core network element. As illustrated in Figure 3, if the network device is a base station, then in S310a, the base station can directly send the UE-specific DRX cycle corresponding to the LPHAP function to the UE; if the network device is a core network (CN) element, then in S310b, the core network element can send the UE-specific DRX cycle corresponding to the LPHAP function to the UE through the base station.

Optionally, the UE-specific DRX cycle corresponding to the LPHAP function can be longer than 10.24 seconds (s).

Optionally, the UE can be configured by the core network to apply the LPHAP-related function, for example, in S310, the network device can configure the LPHAP-related function for the UE at the same time; or the UE itself can be pre-configured to apply the LPHAP-related function.

S320, the UE applies the formula MAX (LPHAP UE-specific DRX cycle, default DRX cycle) to determine the target DRX cycle.

Optionally, the target DRX cycle can refer to the DRX cycle actually to be applied by the terminal device.

Optionally, if the UE is a non-energy-saving terminal device, it can use the existing technical methods to determine the target DRX cycle, for example, it can take the default DRX cycle as the target DRX cycle.

Figure 4 is a schematic flowchart of a communication method according to an embodiment of the disclosure. The method 400 illustrated in Figure 4 can include steps S410 and S420, specifically as follows.

S410, a network device sends a UE-specific DRX cycle corresponding to an LPHAP function to a UE.

The network device can be a base station (gNB) or a core network element. As illustrated in Figure 4, if the network device is a base station, then in S410a, the base station can directly send the UE-specific DRX cycle corresponding to the LPHAP function to the UE; if the network device is a core network element, then in S410b, the core network element can send the UE-specific DRX cycle corresponding to the LPHAP function to the UE through the base station.

Optionally, the UE-specific DRX cycle corresponding to the LPHAP function can be longer than 10.24 seconds (s).

Optionally, the UE can be configured by the core network to apply the LPHAP-related function, for example, in S410, the network device can configure the LPHAP-related function for the UE at the same time; or the UE itself can be pre-configured to apply the LPHAP-related function.

S420, the UE applies the formula min (LPHAP default DRX cycle, UE-specific DRX cycle) to determine the target DRX cycle.

Optionally, the target DRX cycle can refer to the DRX cycle actually to be applied by the terminal device.

Optionally, before S420, the UE can also determine whether to apply the default DRX cycle or the LPHAP default DRX cycle to determine the target DRX cycle according to its own situation.

Optionally, the UE can determine, according to whether the UE is an energy-saving terminal device, whether to determine the target DRX cycle according to the default DRX cycle or the LPHAP default DRX cycle.

For example, if the UE is an energy-saving terminal device, then it can execute S420, that is, the UE can determine the target DRX cycle = min (LPHAP default DRX cycle, UE-specific DRX cycle); if the UE is a non-energy-saving terminal device, then the UE can determine the target DRX cycle = min (default DRX cycle, UE-specific DRX cycle).

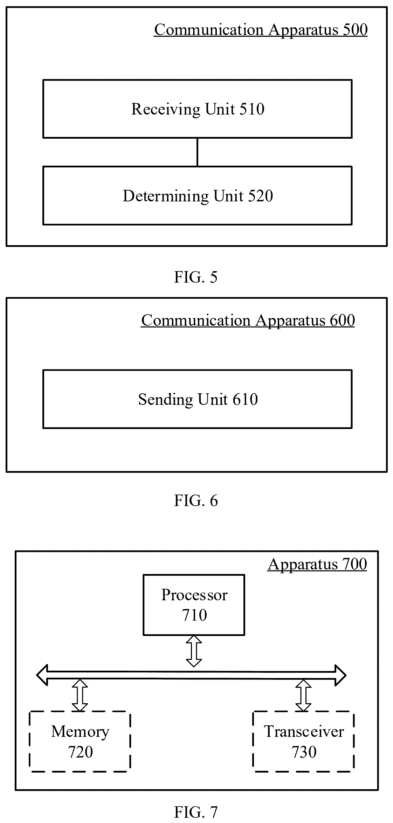

The method embodiments of the disclosure are described in conjunction with Figures 1 to 4, apparatus embodiments of the disclosure will be described in detail below in conjunction with Figures 5 to 7. It should be understood that the description of the method embodiments corresponds to the description of the apparatus embodiments, therefore, the parts not described in detail can refer to the method embodiments described above.

Figure 5 is a schematic structural diagram of a communication apparatus according to an embodiment of the disclosure. As illustrated in Figure 5, the apparatus 500 includes a receiving unit 510 and a determining unit 520, specifically as follows.

The receiving unit 510 is configured to receive first information. The first information indicates a first DRX cycle corresponding to an energy-saving function.

The determining unit 520 is configured to determine a target DRX cycle of the apparatus according to the first information.

Optionally, the first DRX cycle is a UE-specific DRX cycle corresponding to the energy-saving function.

Optionally, the determining unit 520 is configured to determine the target DRX cycle according to the first DRX cycle and a second DRX cycle. The second DRX cycle is a default DRX cycle.

Optionally, the determining unit 520 is configure to determine the maximum value among the first DRX cycle and the second DRX cycle as the target DRX cycle.

Optionally, the receiving unit 510 is configured to receive the first information through radio resource control (RRC) signaling or non-access stratum (NAS) signaling.

Optionally, the first DRX cycle is a default DRX cycle corresponding to the energy-saving function.

Optionally, the determining unit 520 is configured to determine the target DRX cycle according to the first DRX cycle and a third DRX cycle. The third DRX cycle is a UE-specific DRX cycle of the apparatus.

Optionally, the determining unit 520 is configured to determine the minimum value among the first DRX cycle and the third DRX cycle as the target DRX cycle.

Optionally, the receiving unit 510 is configured to receive the first information through a broadcast message or non-access stratum (NAS) signaling.

Optionally, the receiving unit 510 is further configured to receive second information, and the second information is used to configure an energy-saving function for the apparatus.

Optionally, the determining unit 520 is also configured to: determine, according to the second information, whether to determine the target DRX cycle according to the first DRX cycle and the third DRX cycle or according to the second DRX cycle and the third DRX cycle, the second DRX cycle is a default DRX cycle.

Optionally, the apparatus 500 is pre-configured with an energy-saving function.

Optionally, the energy-saving function includes a low power high accuracy positioning (LPHAP) function.

Figure 6 is a schematic structural diagram of a communication apparatus according to an embodiment of the disclosure. The communication apparatus 600 illustrated in Figure 6 includes a sending unit 610, specifically as follows.

The sending unit 610 is configured to send first information, the first information indicates a first DRX cycle corresponding to an energy-saving function.

Optionally, the first DRX cycle is a UE-specific DRX cycle corresponding to the energy-saving function.

Optionally, the sending unit 610 is configured to send the first information through radio resource control (RRC) signaling or non-access stratum (NAS) signaling.

Optionally, the first DRX cycle is a default DRX cycle corresponding to the energy-saving function.

Optionally, the sending unit 610 is configured to send the first information through a broadcast message or non-access stratum (NAS) signaling.

Optionally, the sending unit 610 is configured to send the first information through an access network device.

Optionally, the sending unit 610 is further configured to: send second information, the second information is used to configure an energy-saving function for the terminal device.

Optionally, the energy-saving function includes a low power high accuracy positioning (LPHAP) function.

Optionally, the apparatus 600 is an access network device or a core network element.

Figure 7 is a schematic structural diagram of an apparatus according to an embodiment of the disclosure. The dashed lines in Figure 7 indicate that the unit or module is optional. The apparatus 700 can be configured to implement the method described in the method embodiments above. The apparatus 700 can be a chip or a communication apparatus.

The apparatus 700 can include one or more processors 710. The processor 710 can support the apparatus 700 to implement the method described in the method embodiments above. The processor 710 can be a general-purpose processor or a dedicated processor. For example, the processor can be a central processing unit (CPU). Alternatively, the processor can also be other general-purpose processors, digital signal processors (DSP), application specific integrated circuits (ASIC), field programmable gate arrays (FPGA), or other programmable logic devices, discrete gate or transistor logic devices, discrete hardware components, etc. A general-purpose processor can be a microprocessor or any other conventional processor.

The apparatus 700 can also include one or more memories 720. The memory 720 stores programs that can be executed by the processor 710 to enable the processor 710 to perform the method described in the method embodiments above. The memory 720 can be independent of the processor 710 or integrated into the processor 710.

The apparatus 700 can also include a transceiver 730. The processor 710 can communicate with other devices or chips through the transceiver 730. For example, the processor 710 can transmit and/or receive data with other devices or chips through the transceiver 730.

The disclosure also provides a computer-readable storage medium, which is used to store programs. The computer-readable storage medium can be applied to the communication apparatus provided in the disclosure, and the programs enable a computer to perform the methods performed by the communication apparatus in the various embodiments of the disclosure.

The disclosure also provides a computer program product. The computer program product includes programs. The computer program product can be applied to the communication apparatus provided in the disclosure, and the programs enable a computer to perform the methods performed by the communication apparatus in the various embodiments of the disclosure.

The disclosure also provides a computer program. The computer program can be applied to the communication apparatus provided in the disclosure, and the computer program enables a computer to perform the methods performed by the communication apparatus in the various embodiments of the disclosure.

It should be understood that in the disclosure, "B corresponding to A" indicates that B is associated with A, and B can be determined according to A. However, it should also be understood that determining B according to A does not mean determining B solely according to A, but also according to A and/or other information.

It should be understood that the term "and/or" in this application is merely a description of the relationship between associated objects, indicating that there can be three relationships, for example, A and/or B can mean: A alone exists, A and B exist simultaneously, or B alone exists. In addition, the character "/" in this application generally indicates an "or" relationship between the associated objects.

It should be understood that in the various embodiments of the disclosure, the sequence numbers of the above processes do not imply the order of execution. The execution order should be determined based on their functions and inherent logic, and should not impose any limitations on the implementation process of the embodiments of the disclosure.

In the several embodiments provided in the disclosure, it should be understood that the disclosed systems, apparatuses, and methods can be implemented in other ways. For example, the above-described apparatus embodiments are merely illustrative. For example, the division of the units is merely a logical function division, and there can be other division methods during actual implementation. For example, multiple units or components can be combined or integrated into another system, or some features can be ignored or not executed. Another point is that the coupling or direct coupling or communication connection illustrated or discussed between each other can be indirect coupling or communication connection through some interfaces, devices or units, and can be in the form of electrical, mechanical or other forms.

The units described as separate components may or may not be physically separate, and the components displayed as units may or may not be physical units, that is, they can be located in one place, or they can be distributed on multiple network units. The parts or all of the units can be selected according to the actual needs to achieve the purpose of the solution of the present embodiment.

In addition, in the various embodiments of the disclosure, each functional unit can be integrated into one processing unit, or each unit can exist separately physically, or two or more units can be integrated into one unit.

In the above embodiments, the implementation can be fully or partially realized through software, hardware, firmware, or any combination thereof. When implemented through software, it can be fully or partially realized in the form of a computer program product. The computer program product includes one or more computer instructions. When the computer program instructions are loaded and executed on a computer, all or part of the processes or functions described in the embodiments of the disclosure are generated. The computer can be a general-purpose computer, a dedicated computer, a computer network, or other programmable devices. The computer instructions can be stored in a computer-readable storage medium, or transmitted from one computer-readable storage medium to another computer-readable storage medium, for example, the computer instructions can be transmitted from one website, computer, server or data center to another website, computer, server or data center through wired (such as coaxial cable, optical fiber, digital subscriber line (DSL)) or wireless (such as infrared, wireless, microwave, etc.) means. The computer-readable storage medium can be any available medium that can be read by a computer, or a data storage device integrated with one or more available media, such as a server, data center, etc. The available medium can be a magnetic medium (for example, a floppy disk, a hard disk, a magnetic tape), an optical medium (for example, a digital video disc (DVD)), or a semiconductor medium (for example, a solid state disk (SSD)), etc.

The above description is only a specific implementation manner of the disclosure, but the protection scope of the disclosure is not limited to this. Any changes or substitutions that can be easily thought of by those skilled in the technical field within the technical scope disclosed by the disclosure should be covered within the protection scope of the disclosure. Therefore, the protection scope of the disclosure should be subject to the protection scope of the claims.

## Claims

1. A communication method, comprising:
receiving, by a terminal device, first information, the first information indicating a first discontinuous reception (DRX) cycle corresponding to an energy-saving function; and
determining, by the terminal device, a target DRX cycle of the terminal device according to the first information.

2. The method according to claim 1, wherein the first DRX cycle is a user equipment (UE)-specific DRX cycle corresponding to the energy-saving function.

3. The method according to claim 1 or 2, wherein determining, by the terminal device, the target DRX cycle of the terminal device according to the first information comprises:
determining, by the terminal device, the target DRX cycle according to the first DRX cycle and a second DRX cycle, the second DRX cycle being a default DRX cycle.

4. The method according to claim 3, wherein determining, by the terminal device, the target DRX cycle according to the first DRX cycle and the second DRX cycle comprises:
determining, by the terminal device, a maximum value among the first DRX cycle and the second DRX cycle as the target DRX cycle.

5. The method according to any one of claims 1 to 4, wherein receiving, by the terminal device, the first information comprises:
receiving, by the terminal device, the first information through radio resource control (RRC) signaling or non-access stratum (NAS) signaling.

6. The method according to claim 1, wherein the first DRX cycle is a default DRX cycle corresponding to the energy-saving function.

7. The method according to any one of claims 1 or 6, wherein determining, by the terminal device, the target DRX cycle of the terminal device according to the first information comprises:
determining, by the terminal device, the target DRX cycle according to the first DRX cycle and a third DRX cycle, the third DRX cycle being a UE-specific DRX cycle of the terminal device.

8. The method according to claim 7, wherein determining, by the terminal device, the target DRX cycle according to the first DRX cycle and the third DRX cycle comprises:
determining, by the terminal device, a minimum value among the first DRX cycle and the third DRX cycle as the target DRX cycle.

9. The method according to any one of claims 1, 6 to 8, wherein receiving, by the terminal device, the first information comprises:
receiving, by the terminal device, the first information through a broadcast message or non-access stratum (NAS) signaling.

10. The method according to any one of claims 6 to 9, further comprising:
receiving, by the terminal device, second information, the second information being used to configure the energy-saving function for the terminal device.

11. The method according to claim 10, further comprising:
determining, by the terminal device according to the second information, whether to determine the target DRX cycle according to the first DRX cycle and the third DRX cycle or according to the second DRX cycle and the third DRX cycle, the second DRX cycle being a default DRX cycle.

12. The method according to any one of claims 1 to 9, wherein the terminal device is pre-configured with the energy-saving function.

13. The method according to any one of claims 1 to 12, wherein the energy-saving function comprises a low power high accuracy positioning (LPHAP) function.

14. A communication method, comprising:
sending, by a network device, first information, the first information indicating a first discontinuous reception (DRX) cycle corresponding to an energy-saving function.

15. The method according to claim 14, wherein the first DRX cycle is a UE-specific DRX cycle corresponding to the energy-saving function.

16. The method according to claim 14 or 15, wherein sending, by the network device, the first information comprises:
sending, by the network device, the first information through radio resource control (RRC) signaling or non-access stratum (NAS) signaling.

17. The method according to claim 14, wherein the first DRX cycle is a default DRX cycle corresponding to the energy-saving function.

18. The method according to claim 14 or 17, wherein sending, by the network device, the first information comprises:
sending, by the network device, the first information through a broadcast message or non-access stratum (NAS) signaling.

19. The method according to any one of claims 14 to 18, wherein sending, by the network device, the first information comprises:
sending, by the network device, the first information through an access network device.

20. The method according to claims 14 to 19, further comprising:
sending, by the network device, second information, the second information being used to configure the energy-saving function for the terminal device.

21. The method according to any one of claims 14 to 20, wherein the energy-saving function comprises a low power high accuracy positioning (LPHAP) function.

22. The method according to any one of claims 14 to 21, wherein the network device is an access network device or a core network element.

23. A communication apparatus, comprising:
a receiving unit, configured to receive first information, the first information indicating a first discontinuous reception (DRX) cycle corresponding to an energy-saving function; and
a determining unit, configured to determine a target DRX cycle of the apparatus according to the first information.

24. The apparatus according to claim 23, wherein the first DRX cycle is a user equipment (UE)-specific DRX cycle corresponding to the energy-saving function.

25. The apparatus according to claim 23 or 24, wherein the determining unit is configured to:
determine the target DRX cycle according to the first DRX cycle and a second DRX cycle, the second DRX cycle being a default DRX cycle.

26. The apparatus according to claim 25, wherein the determining unit is configured to:
determine a maximum value among the first DRX cycle and the second DRX cycle as the target DRX cycle.

27. The apparatus according to any one of claims 23 to 26, wherein the receiving unit is configured to:
receive the first information through radio resource control (RRC) signaling or non-access stratum (NAS) signaling.

28. The apparatus according to claim 23, wherein the first DRX cycle is a default DRX cycle corresponding to the energy-saving function.

29. The apparatus according to claim 23 or 28, wherein the determining unit is configured to:
determine the target DRX cycle according to the first DRX cycle and a third DRX cycle, the third DRX cycle being a UE-specific DRX cycle of the apparatus.

30. The apparatus according to claim 29, wherein the determining unit is configured to:
determine a minimum value among the first DRX cycle and the third DRX cycle as the target DRX cycle.

31. The apparatus according to any one of claims 23, 28 to 30, wherein the receiving unit is configured to:
receive the first information through a broadcast message or non-access stratum (NAS) signaling.

32. The apparatus according to any one of claims 28 to 31, wherein the receiving unit is further configured to:
receive second information, the second information being used to configure the energy-saving function for the apparatus.

33. The apparatus according to claim 32, wherein the determining unit is further configured to:
determine, according to the second information, whether to determine the target DRX cycle according to the first DRX cycle and the third DRX cycle or according to the second DRX cycle and the third DRX cycle, the second DRX cycle being a default DRX cycle.

34. The apparatus according to any one of claims 23 to 31, wherein the apparatus is pre-configured with the energy-saving function.

35. The apparatus according to any one of claims 23 to 34, wherein the energy-saving function comprises a low power high accuracy positioning (LPHAP) function.

36. A communication apparatus, comprising:
a sending unit, configured to send first information, the first information indicating a first discontinuous reception (DRX) cycle corresponding to an energy-saving function.

37. The apparatus according to claim 36, wherein the first DRX cycle is a UE-specific DRX cycle corresponding to the energy-saving function.

38. The apparatus according to claim 36 or 37, wherein the sending unit is configured to send the first information through radio resource control (RRC) signaling or non-access stratum (NAS) signaling.

39. The apparatus according to claim 36, wherein the first DRX cycle is a default DRX cycle corresponding to the energy-saving function.

40. The apparatus according to claim 36 or 39, wherein the sending unit is configured to send the first information through a broadcast message or non-access stratum (NAS) signaling.

41. The apparatus according to any one of claims 36 to 40, wherein the sending unit is configured to send the first information through an access network device.

42. The apparatus according to any one of claims 36 to 41, wherein the sending unit is further configured to:
send second information, the second information being used to configure an energy-saving function for the terminal device.

43. The apparatus according to any one of claims 36 to 42, wherein the energy-saving function comprises a low power high accuracy positioning (LPHAP) function.

44. The apparatus according to any one of claims 36 to 43, wherein the apparatus is an access network device or a core network element.

45. A communication apparatus, comprising a memory, a transceiver, and a processor, the memory being configured to store programs, the processor being configured to transmit and receive data through the transceiver, the processor being configured to call the programs stored in the memory to enable the communication apparatus to perform the method as claimed in any one of claims 1 to 13.

46. A communication apparatus, comprising a memory, a transceiver, and a processor, the memory being configured to store programs, the processor being configured to transmit and receive data through the transceiver, the processor being configured to call the programs stored in the memory to enable the communication apparatus to perform the method as claimed in any one of claims 14 to 22.

47. A communication apparatus, comprising a processor, the processor being configured to call programs from the memory to enable the communication apparatus to perform the method as claimed in any one of claims 1 to 13.

48. A communication apparatus, comprising a processor, the processor being configured to call programs from the memory to enable the communication apparatus to perform the method as described in any one of claims 14 to 22.

49. A chip, comprising a processor, the processor being configured to call programs from the memory to enable a device equipped with the chip to perform the method as claimed in any one of claims 1 to 13.

50. A chip, comprising a processor, the processor being configured to call programs from the memory to enable a device equipped with the chip to perform the method as claimed in any one of claims 14 to 22.

51. A computer-readable storage medium, having programs stored thereon, the programs enabling a computer to perform the method as claimed in claims 1 to 13.

52. A computer-readable storage medium, having programs stored thereon, the programs enabling a computer to perform the method as claimed in claims 14 to 22.

53. A computer program product, comprising programs, the programs enabling a computer to perform the method as claimed in claims 1 to 13.

54. A computer program product, comprising programs, the programs enabling a computer to perform the method as claimed in claims 14 to 22.

55. A computer program, wherein the program enables a computer to perform the method as claimed in any one of claims 1 to 13.

56. A computer program, wherein the program enables a computer to perform the method as claimed in any one of claims 14 to 22.
